# EUROPEAN PATENT SPECIFICATION

(11) **EP 4 054 268 B1**
(45) Date of publication and mention of the grant of the patent: **02.04.2025**
(21) Application number: 22158788.4
(22) Date of filing: 25.02.2022
(51) Int. Cl.: H04W 72/23, H04W 84/12

(54) **EXTREMELY-HIGH-THROUGHPUT ENHANCED SUBCHANNEL SELECTIVE TRANSMISSION OPERATION IN WIRELESS COMMUNICATIONS**
ERWEITERTER SUBKANALSELEKTIVER ÜBERTRAGUNGSBETRIEB MIT EXTREM HOHEM DURCHSATZ IN DRAHTLOSEN KOMMUNIKATIONEN
FONCTIONNEMENT DE TRANSMISSION SÉLECTIVE À CANAL SECONDAIRE AMÉLIORÉ À DÉBIT EXTRÊMEMENT ÉLEVÉ DANS DES COMMUNICATIONS SANS FIL

(30) Priority: 02.03.2021 US 202163155313 P; 23.02.2022 US 202217679042
(43) Date of publication of application: 07.09.2022
(73) Proprietor: MediaTek Singapore Pte. Ltd., Singapore 138628 (SG)
(72) Inventor: SEOK, Yongho, San Jose, 95134 (US); YEE, James Chih-Shi, San Jose, 95134 (US)
(74) Representative: Hoefer & Partner Patentanwälte mbB

(56) References cited:
- YONGHO SEOK (MEDIATEK): "Multi-link Spatial Multiplexing", vol. 802.11 EHT; 802.11be, 2 July 2020 (2020-07-02), pages 1 - 14, XP068169740, Retrieved from the Internet <URL:https://mentor.ieee.org/802.11/dcn/20/11-20-0883-00-00be-multi-link-spatial-multiplexing.pptx> [retrieved on 20200702]
- MINYOUNG PARK (INTEL CORP): "Enhanced multi-link single radio operation", vol. 802.11 EHT; 802.11be, no. 1, 15 May 2020 (2020-05-15), pages 1 - 14, XP068167935, Retrieved from the Internet <URL:https://mentor.ieee.org/802.11/dcn/20/11-20-0562-01-00be-enhanced-multi-link-single-radio-operation.pptx> [retrieved on 20200515]
- TAEWON SONG (LG ELECTRONICS): "RTS/CTS for multi-link", vol. 802.11 EHT; 802.11be, 23 March 2020 (2020-03-23), pages 1 - 16, XP068167567, Retrieved from the Internet <URL:https://mentor.ieee.org/802.11/dcn/20/11-20-0430-00-00be-rts-cts-for-multi-link.pptx> [retrieved on 20200323]
- JEONGKI KIM (LG ELECTRONICS): "Minutes for TGbe MAC Ad-Hoc teleconferences in Nov 2020 and Jan 2021", vol. 802.11 EHT; 802.11be, no. 14, 14 January 2021 (2021-01-14), pages 1 - 77, XP068176013, Retrieved from the Internet <URL:https://mentor.ieee.org/802.11/dcn/20/11-20-1765-14-00be-minutes-for-tgbe-mac-ad-hoc-teleconferences-in-nov-2020-and-jan-2021.docx> [retrieved on 20210114]

## Description

### CROSS REFERENCE TO RELATED PATENT APPLICATION

The present disclosure is part of a non-provisional patent application claiming the priority benefit of U.S. Provisional Patent Application No. 63/155,313, filed 02 March 2021.

### TECHNICAL FIELD

The present disclosure is generally related to wireless communications and, in particular, to extremely-high-throughput (EHT) enhanced subchannel selective transmission (SST) operation in wireless communications. More particularly, the present invention relates to a method according to the pre-characterizing part of independent claim 1 and to a corresponding apparatus. Such method and apparatus are disclosed in each of the documents Seok Y. et al.: "Multi-link Spatial Multiplexing", Park M. et al.: "Enhanced multi-link single radio operation", Song T. et al.: "RTS/CTS for multi-link", and Kim J. et. al.: "Minutes for TGbe MAC Ad-Hoc teleconferences in November 2020 and January 2021"

### BACKGROUND

Unless otherwise indicated herein, approaches described in this section are not prior art to the claims listed below and are not admitted as prior art by inclusion in this section.

In a wireless local area network (WLAN) according to the Institute of Electrical and Electronics Engineers (IEEE) 802.11 specifications, a 20-MHz-only non-access point (non-AP) high-efficiency (HE) station (STA) is a non-AP HE STA that indicates in a Supported Channel Width Set subfield in the HE physical layer (PHY) Capabilities Information field of the HE Capabilities element transmitted by the STA that the STA supports for only 20-MHz channel width for a frequency band in which the STA is operating. A 20-MHz operating non-AP HE STA is a non-AP HE STA that is operating in a 20-MHz channel width mode, such as a 20-MHz-only non-AP HE STA or a HE STA that reduced its operating channel width to 20 MHz using operating mode indication (OMI). A 20-MHz operating non-AP HE STA is to operate in a primary 20-MHz channel except when the 20-MHz operating non-AP STA is a 20-MHz-only non-AP HE STA with dot11 HESubchannelSelective-Transmissionlmplemented equal to true. In such a case, the 20-MHz-only non-AP HE STA can operate in any 20-MHz channel within a basic service set (BSS) bandwidth by following a predefined procedure for HE SST. However, in case a 20-MHz operating non-AP HE STA is the receiver of a 40-MHz, 80-MHz, 80+80-MHz or 160-MHz HE multi-user (MU) Physical Layer Convergence Protocol (PLCP) Protocol Data Unit (PPDU) or the transmitter of a 40-MHz, 80-MHz, 80+80-MHz or 160-MHz HE trigger-based (TB) PPDU, then a resource unit (RU) tone mapping in a 20-MHz band would not be aligned with 40-MHz, 80-MHz, 80+80-MHz or 160-MHz RU tone mapping. Therefore, there is a need for a solution for EHT enhanced SST operation in wireless communications.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods and apparatuses pertaining to EHT enhanced SST operation in wireless communications. Under various proposed schemes in accordance with the present disclosure, issues described herein may be addressed. For instance, an EHT SST operation by a 20-MHz operating STA, an 80-MHz operating STA and a 160-MHz operating STA in an EHT 320-MHz BSS may be supported by implementing various schemes proposed herein. A method and an apparatus according to the invention are defined in the independent claims. The dependent claims define preferred embodiments thereof.

In one aspect, a method is disclosed, according to independent claim 1.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5^{th} Generation (5G)/New Radio (NR), Long-Term Evolution (LTE), LTE-Advanced, LTE-Advanced Pro, Internet-of-Things (IoT), Industrial IoT (IIoT) and narrowband IoT (NB-IoT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various solutions and schemes in accordance with the present disclosure may be implemented.
FIG. 2 is a diagram of an example scenario in accordance with an implementation of the present disclosure.
FIG. 3 is a diagram of an example scenario in accordance with an implementation of the present disclosure.
FIG. 4 is a diagram of an example scenario in accordance with an implementation of the present disclosure.
FIG. 5 is a diagram of an example scenario in accordance with an implementation of the present disclosure.
FIG. 6 is a diagram of an example design in accordance with an implementation of the present disclosure.
FIG. 7 is a diagram of an example design in accordance with an implementation of the present disclosure.
FIG. 8 is a diagram of an example scenario in accordance with an implementation of the present disclosure.
FIG. 9 is a diagram of an example design in accordance with an implementation of the present disclosure.
FIG. 10 is a diagram of an example scenario in accordance with an implementation of the present disclosure.
FIG. 11 is a diagram of an example scenario in accordance with an implementation of the present disclosure.
FIG. 12 is a diagram of an example scenario in accordance with an implementation of the present disclosure.
FIG. 13 is a block diagram of an example communication system in accordance with an implementation of the present disclosure.
FIG. 14 is a flowchart of an example process in accordance with an implementation of the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to EHT enhanced SST operation in wireless communications. According to the present disclosure, a number of possible solutions may be implemented separately or jointly. That is, although these possible solutions may be described below separately, two or more of these possible solutions may be implemented in one combination or another.

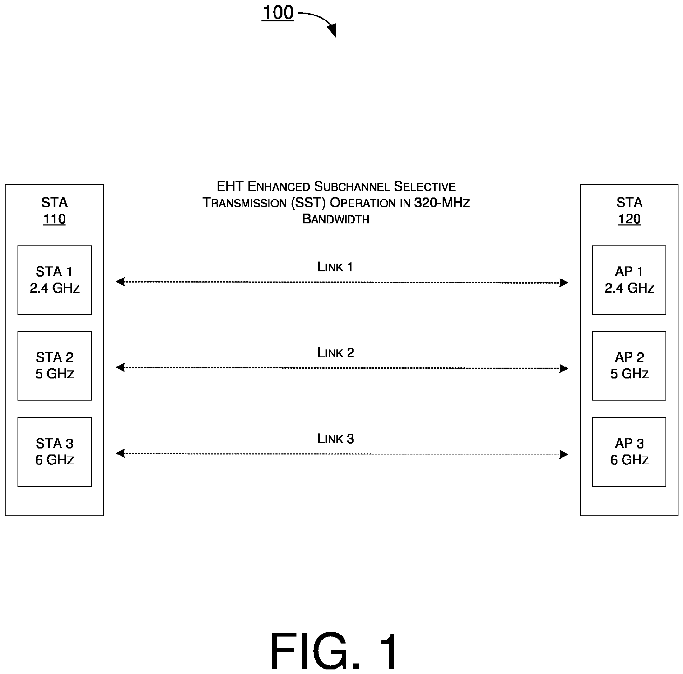

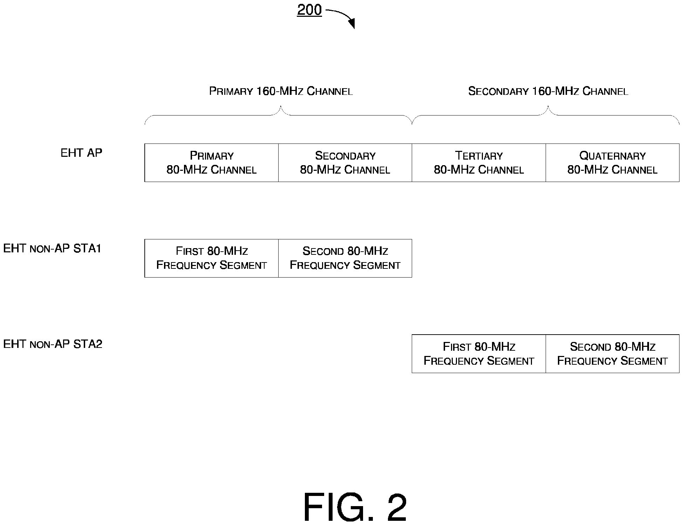

FIG. 1 illustrates an example network environment 100 in which various solutions and schemes in accordance with the present disclosure may be implemented. FIG. 2 ~ FIG. 14 illustrate examples of implementation of various proposed schemes in network environment 100 in accordance with the present disclosure. The following description of various proposed schemes is provided with reference to FIG. 1 ~ FIG. 14.

Referring to FIG. 1, network environment 100 may involve a STA 110 and a STA 120 communicating wirelessly over multiple links (e.g., link 1, link 2 and link 3), or in multiple frequency segments, in accordance with one or more Institute of Electrical and Electronics Engineers (IEEE) 802.11 standards such as IEEE 802.11be and beyond. Each of STA 110 and STA 120 may function as an MLD. For instance, STA 110 may function as a non-AP MLD with multiple virtual STAs (e.g., STA 1, STA 2 and STA 3) operating within STA 110. Correspondingly, STA 120 may function as an AP MLD with multiple virtual APs (e.g., AP 1, AP 2 and AP 3) operating within STA 120. For instance, in implementing various proposed schemes described herein, STA 110 may function as an HE SST non-AP STA, an EHT single-radio SST non-AP STA or an EHT multi-link SST non-AP STA. Correspondingly, in implementing various proposed schemes described herein, STA 120 may function as an HE SST AP or an EHT multi-link SST AP. Under various proposed schemes in accordance with the present disclosure, STA 110 and STA 120 may be configured to perform EHT enhanced SST operation in wireless communications according to various proposed schemes described herein.

Under current IEEE specification, with respect to 20-MHz operating non-AP HE STAs, a HE AP operating in a 5-GH frequency band or a 6-GHz frequency band may be able to interoperate with non-AP HE STAs, regardless of the indicated value of B1 in the Supported Channel Width Set subfield in the HE PHY Capabilities Information field in the HE Capabilities element. A 20-MHz operating non-AP HE STA may support tone mapping of 26-tone RU, 52-tone RU, 106-tone RU and 242-tone RU for a 20-MHz HE PPDU in the 2.4-GHz and 5-GHz frequency bands. A 20-MHz operating non-AP HE STA may indicate support of tone mapping of 26-tone RU, 52-tone RU and 106-tone RU for a 40-MHz HE PPDU in the 2.4-GHz frequency band and using 20 MHz in 40-MHz HE PPDUs in the 2.4-GHz Band subfield in the HE PHY Capabilities Information field in the HE Capabilities element with the exception of RUs that are restricted from operation. Additionally, a 20-MHz operating non-AP HE STA may support tone mapping of 26-tone RU, 52-tone RU and 106-tone RU for 40-MHz HE PPDUs in the 5-GHz frequency band, as well as for 80-MHz HE PPDUs in the 5-GHz and 6-GHz frequency bands with the exception of RUs that are restricted from operation. Moreover, a 20-MHz operating non-AP HE STA may indicate support of tone mapping of 26-tone RU, 52-tone RU and 106-tone RU for 80+80-MHz and 160-MHz HE PPDUs using 20 MHz in 160/80+80-MHz HE PPDU subfield in the HE PHY Capabilities Information field in the HE Capabilities element with the exception of RUs that are restricted from operation. Furthermore, a 20-MHz operating non-AP HE STA may support tone mapping of 242-tone RU for the reception of 40-MHz HE PPDUs in the 2.4-GHz, 5-GHz and 6-GHz frequency bands, as well as 80-MHz, 80+80-MHz and 160-MHz HE MU PPDUs in the 5-GHz and 6-GHz frequency bands. This support may be indicated in the Supported Channel Width Set subfield in the HE PHY Capabilities Information field of the HE Capabilities element.

With respect to RU restrictions for 20-MHz operations, an AP may not assign certain RUs to a 20-MHz operating non-AP HE STA where the RU index is defined in Table 27-8 of the IEEE specification regarding data and pilot subcarrier indices for RUs in a 40-MHz HE PPDU. Such RUs may include at least 26-tone RU 5 and 14 of a 40-MHz HE MU PPDU and HE TB PPDU. Also, an AP may not assign certain RUs to a 20-MHz operating non-AP HE STA where the RU index is defined in Table 27-9 of the IEEE specification regarding data and pilot subcarrier indices for RUs in an 80-MHz HE PPDU. Such RUs may include at least 26-tone RU 5, 10, 14, 19, 24, 28 and 33 of an 80-MHz HE MU PPDU and HE TB PPDU, 26-tone RU 5, 10, 14, 19, 24, 28 and 33 of the lower 80 MHz of an 80+80-MHz and 160-MHz HE MU PPDU and HE TB PPDU, and 26-tone RU 5, 10, 14, 19, 24, 28 and 33 of the upper 80 MHz of an 80+80-MHz HE MU PPDU and HE TB PPDU.

With respect to 80-MHz operating non-AP HE STAs, a non-AP HE STA capable of up to 80-MHz channel width, when operating with 80-MHz channel width, may indicate support of reception of 160-MHz or 80+80-MHz HE MU PPDUs or the transmission of 160-MHz or 80+80-MHz HE TB PPDUs in the 80 MHz in the 160/80+80-MHz HE PPDU subfield in the HE PHY Capabilities Information field in the HE Capabilities element. An HE AP STA may not allocate RUs outside of the primary 80 MHz when allocating an RU in a 160-MHz or 80+80-MHz HE MU PPDU or HE TB PPDU to a non-AP HE STA that sets the 80 MHz in 160/80+80-MHz HE PPDU subfield in the HE PHY Capabilities Information field in the HE Capabilities element to 1 and is operating in an 80-MHz channel width mode.

With respect to HE SST, an HE STA that supports HE SST operation may set *dot11HESubchannelSelective Transmissionimplemented* to true and may set the HE Subchannel Selective Transmission Support field in the HE Capabilities element it transmits to 1. An HE STA that does not support HE SST operation may set the HE Subchannel Selective Transmission Support field in the HE Capabilities element it transmits to 0. An HE non-AP STA with *dot11HESubchannelSelective Transmissionimplemented* set to true may be an HE SST STA. An HE AP with *dot11HESubchannelSelectiveTransmissionImplemented* set to true may be an HE SST AP. An HE SST STA may set up SST operation by negotiating a trigger-enabled target wake time (TWT) as defined in Section 26.8.2 (Individual TWT agreements) of the IEEE specification with some exceptions. A first exception may be that the TWT Request may have a TWT Channel field with up to one bit set to 1 to indicate which of the secondary channels is requested to contain the RU allocations addressed to the HE SST STA that is a 20-MHz operating STA. A second exception may be that the TWT Request may have a TWT Channel field with all four least-significant bits (LSBs) or all four most-significant bits (MSBs) set to 1 to indicate whether the primary 80-MHz channel or the secondary 80-MHz channel is requested to contain the RU allocations addressed to the HE SST STA that is an 80-MHz operating STA. A third exception may be that the TWT Response may have a TWT Channel field with up to one bit set to 1 to indicate which of the secondary channels would contain the RU allocations addressed to the HE SST STA that is a 20-MHz operating STA. A fourth exception may be that the TWT Response may have a TWT Channel field with all the four LSBs or all the four MSBs to indicate whether the primary 80-MHz channel or the secondary 80-MHz channel would contain the RU allocations addressed to the HE SST STA that is an 80-MHz operating STA.

Moreover, with respect to HE SST, an HE SST STA that successfully sets up SST operation may need to follow certain rules. Also, the HE SST AP may follow the rules defined in Section 26.8.2 (Individual TWT agreements) of the IEEE specification to exchange frames with the HE SST STA during negotiated trigger-enabled TWT service periods (SPs) with some exceptions. One exception may be that the AP may need to ensure that the RUs allocated in DL MU PPDUs and in Trigger frames addressed to the SST STA are within the subchannel indicated in the TWT Channel field of the TWT Response and follows the RU restriction rules defined in Section 27.3.2.8 (RU restrictions for 20 MHz operation) of the IEEE specification in case the SST STA is a 20-MHz operating STA. Another exception may be that the AP may need to ensure that the trigger-enabled TWT SPs do not overlap with TBTTs at which delivery traffic indication map (DTIM) Beacon frames are sent. A further exception may be that the AP may need to ensure that the same subchannel is used for all trigger-enabled TWT SPs that overlap in time.

Furthermore, with respect to HE SST, an HE SST STA operating on the secondary channel may not conduct OMI operation as defined in Section 26.9 (Operating mode indication) of the IEEE specification or OMN operation as defined in Section 11.41 (Notification of operating mode changes) of the IEEE specification to change the operating bandwidth. The HE SST STA may follow the rules defined in Section 26.8.2 (Individual TWT agreements) of the IEEE specification to exchange frames with the HE SST AP during negotiated trigger-enabled TWT SPs with some exceptions. A first exception may be that the STA may need to be available in the subchannel indicated in the TWT Channel field of the TWT Response at TWT start times. A second exception may be that the STA may not access the medium in the subchannel using Distributed Coordination Function (DCF) or Enhanced Distributed Channel Access Function (EDCAF). A third exception may be that the STA may not respond to Trigger frames addressed to it (e.g., Section 26.5 (MU operation) and Section 26.8.2 (Individual TWT agreements) of the IEEE specification) unless it has performed clear channel access (CCA) until a frame is detected by which it can set its NAV, or until a period equal to *NAVSyncDelay* has transpired, whichever is earlier. A fourth exception may be that the STA may need to update its network allocation vector (NAV) according to Section 26.2.4 (Updating two NAVs) of the IEEE specification if it receives a PPDU in the sub-channel.

With respect to multi-link operation, a multi-link framework may involve a multi-link device (MLD) which has a medium access control (MAC) address that singly identifies the MLD management entity. For instance, the MAC address may be used in a multi-link setup between a non-AP MLD and an AP MLD. On a high-level view, MLD MAC address may be used to identify and differentiate different MLDs. The wireless medium (WM) MAC address of a STA may be used for on-the-air (OTA) transmission on the corresponding wireless medium. For an AP MLD to continue to serve a legacy non-high-throughput (non-HT)/high-throughput (HT)/very-high-throughput (VHT)/HE STA, each affiliated AP of the AP MLD may use a different MAC address as ambiguity may exist when two affiliated APs use the same MAC address. For example, in case a first AP (AP1) and a second AP (AP2) use the same MAC address, it would be difficult for a legacy STA to discern whether AP2 is a different AP of AP1 or whether AP2 is actually AP1 performing channel switching. For a non-AP MLD, in case an AP MLD uses different MAC addresses for affiliated STAs, symmetric operation may be performed by the non-AP MLD as well. For instance, the non-AP MLD may serve as a soft AP for peer-to-peer communication, as symmetric operation would simplify implementation considerations. Moreover, transmission from non-AP MLD to AP MLD in different links may have the same Nonce for different messages in case affiliated non-AP STAs have the same MAC address under the same PN space/PTK, which would destroy the security property.

For legacy association, an AP may differentiate different associated non-Ap STAs through MAC addresses of the non-AP STAs. For a multi-link setup, differentiation of different non-AP MLDs may require a similar identifier, and the MAC addresses of non-AP MLDs may serve a similar purpose. On one hand, in case such an identifier has a small size, the small size may lead to identifier collision and confusion in the setup. On the other hand, without any identifier, differentiation of different non-AP MLDs may need to be based on all the configuration details of the non-AP MLDs, but determination of the differences with different configurations would be difficult. Knowing the MAC address of a non-AP MLD after setup may be useful for subsequent negotiations such as negotiations for security and beacon announcement (BA). The MAC address of a non-AP MLD may be indicated during the multi-link setup procedure.

For legacy association, the MAC address of the associated AP may be known before association. For a multi-link setup, it is yet to be defined as to whether discovery of an AP MLD may provide the MAC address of the AP MLD. In case the address of the AP MLD is not known before the multi-link setup, having the address of the AP MLD in the multi-link setup procedure may be useful for subsequent negotiations. In case the address of the AP MLD is known before the multi-link setup, having the address of the AP MLD in the multi-link setup procedure may be useful to confirm the destined MLD for setup and avoid unknown corner cases. For instance, the MAC address of an AP MLD may be indicated during the multi-link setup procedure.

Under a proposed scheme in accordance with the present disclosure, for efficient frequency utilization of an EHT 320-MHz BSS, a 160-MHz operating STA may operate in either a primary 160-MHz channel or a secondary 160-MHz channel within the 320-MHz BSS bandwidth. FIG. 2 illustrates an example scenario 200 of an example implementation of the proposed scheme.

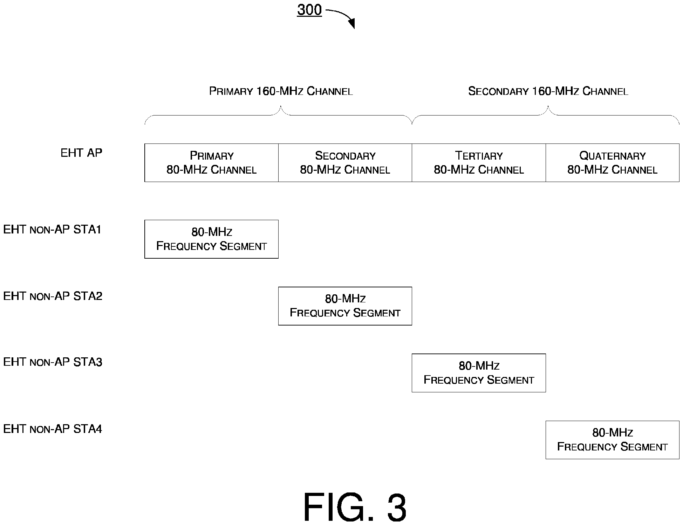

Under a proposed scheme in accordance with the present disclosure, for efficient frequency utilization of an EHT 320-MHz BSS, an 80-MHz or a 20-MHz operating STA may operate in any 80-MHz or 20-MHz channel within the 320-MHz BSS bandwidth. FIG. 3 illustrates an example scenario 300 of an example implementation of the proposed scheme.

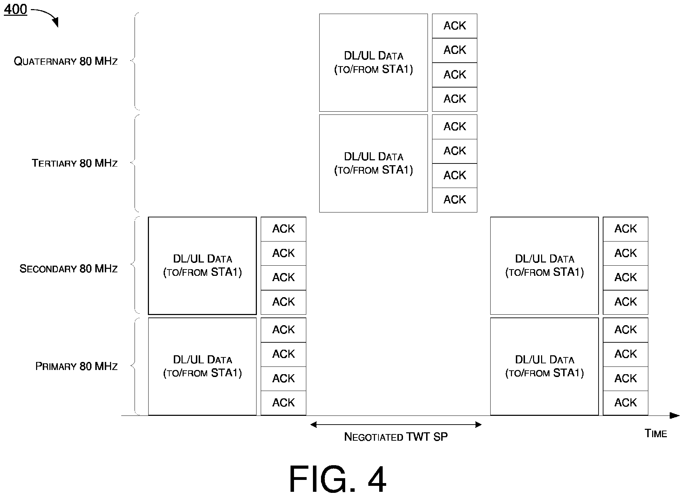

Under a proposed scheme in accordance with the present disclosure with respect to EHT SST operation for a 160-MHz operating STA, for an EHT SST AP (e.g., AP 110) and an EHT SST non-AP STA (e.g., STA 120), the positions of a first 80-MHz frequency segment and a second 80-MHz frequency segment of the EHT SST non-AP STA may be switched to respective negotiated positions during a negotiated TWT SP. FIG. 4 illustrates an example scenario 400 of an example implementation of the proposed scheme.

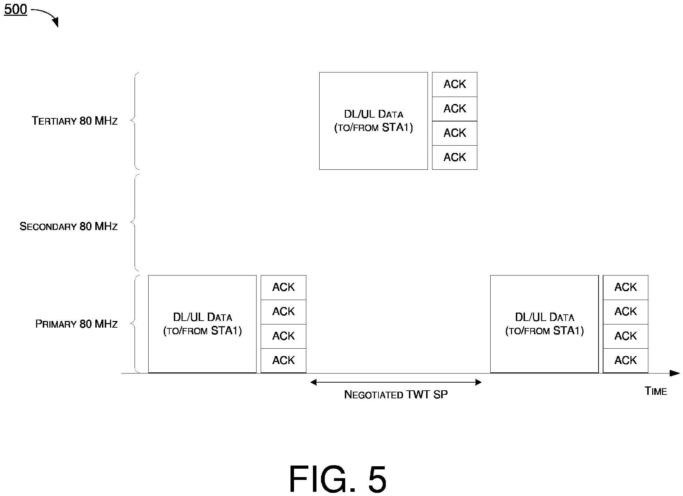

Under a proposed scheme in accordance with the present disclosure with respect to EHT SST operation for an 80-MHz or a 20-MHz operating STA, for an EHT SST AP (e.g., AP 110) and an EHT SST non-AP STA (e.g., STA 120), where the positions of a 80-MHz or 20-MHz frequency segment of the EHT SST non-AP STA may be switched to a negotiated position during a negotiated TWT SP. FIG. 5 illustrates an example scenario 500 of an example implementation of the proposed scheme.

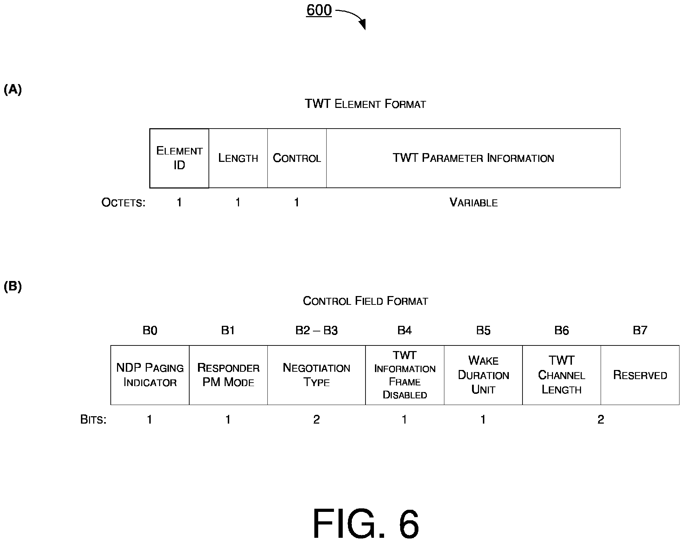

FIG. 6 illustrates an example design 600 of an example TWT element for EHT SST in accordance with a proposed scheme of the present disclosure. Referring to FIG. 6, under the proposed scheme, the TWT element may include an Element identifier (ID) field of 1 octet long, a Length field of 1 octet long, a Control field of 1 octet long, and a TWT Parameter Information field of a variable length. The Control field may include several subfields, including: a Null Data Packet (NDP) Paging Indicator subfield of 1 bit long, a Responder PM Mode subfield of 1 bit long, a Negotiation Type subfield of 2 bits long, a TWT Information Frame Disabled subfield of 1 bit long, a Wake Duration Unit subfield of 1 bit long, a TWT Channel Length subfield of 1 bit long, and a Reserved subfield of 1 bit long.

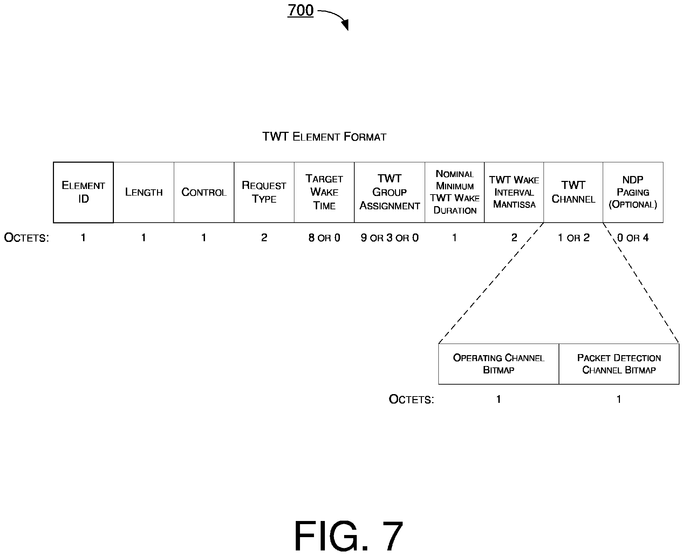

FIG. 7 illustrates an example design 700 of another example TWT element for EHT SST in accordance with the proposed scheme of the present disclosure. Referring to FIG. 7, under the proposed scheme, the TWT element may include an Element ID field of 1 octet long, a Length field of 1 octet long, a Control field of 1 octet long, a Request Type field of 2 octets long, an optional Target Wake Time field of 8 or 0 octets long, an optional TWT Group Assignment field of 9 or 3 or 0 octets long, a Nominal Minimum TWT Wake Duration field of 1 octet long, a TWT Wake Interval Mantissa field of 2 octets long, a TWT Channel field of 1 or 2 octets long, and an optional NDP Paging field of 0 or 4 octets long. For instance, the TWT Channel field may include an Operating Channel Bitmap subfield of 1 octet long and a Packet Detection Channel Bitmap of 1 octet long. Under the proposed scheme, the length of the TWT Channel field in the TWT Parameter Set field may be determined by a TWT Channel Length subfield in the Control field in the TWT element. The TWT Channel Length subfield in the Control field in the TWT element may indicate the length of the TWT Channel field. The TWT Channel Length subfield may be set to 0 in case the length of the TWT Channel field is 1 byte or 1 in case the length of the TWT Channel field is 2 bytes. A non-EHT non-AP STA may set the TWT Channel Length subfield to 0.

Under a proposed scheme in accordance with the present disclosure, an EHT SST non-AP STA (e.g., STA 120) may set up or otherwise establish an EHT SST operation by negotiating a trigger-enabled TWT as defined in Section 26.8.2 (Individual TWT agreements) of the IEEE specification with exception(s). One exception may be that, when the TWT Channel Length subfield is equal to 1, each bit in the Operating Channel Bitmap subfield in the TWT Channel field may correspond to an 80-MHz channel. For example, a TWT Response may have an Operating Channel Bitmap subfield in the TWT Channel field with up to one bit set to 1 to indicate the 80-MHz frequency segment that would contain the RU allocations addressed to the EHT SST non-AP STA that is either a 20-MHz operating STA or an 80-MHz operating STA. Furthermore, an operating channel of a 20-MHz operating STA may be determined within the 80-MHz frequency segment by the Packet Detection Channel Bitmap subfield. As another example, the TWT Response may have an Operating Channel Bitmap subfield in the TWT Channel field with either bits B0-B1 or bits B2-B3 set to 1 to indicate whether the primary 160-MHz channel or the secondary 160-MHz channel contains the RU allocations addressed to the EHT SST non-AP STA that is a 160-MHz operating STA.

Under a proposed scheme in accordance with the present disclosure, the Packet Detection Channel Bitmap subfield in the TWT Channel field may indicate the position of a packet detection channel of an EHT SST non-AP STA (e.g., STA 120) during the negotiated trigger-enabled TWT SPs. For instance, when the TWT Channel Length subfield is equal to 1, the TWT Response may have the *N^{th}* bit in the Packet Detection Channel Bitmap subfield in the TWT Channel field set to 1. The EHT SST non-AP STA may perform the packet detection on the *N^{th}* 20-MHz channel in the operating bandwidth indicated by the Operating Channel Bitmap subfield in the TWT Channel field. Additionally, a TWT Request may indicate one or more channels as the preferred packet detection channels. Moreover, a TWT Response may indicate multiple channels as the packet detection channels.

Under a proposed scheme in accordance with the present disclosure, an EHT SST non-AP STA (e.g., STA 120) that successfully sets up an SST operation may follow certain rules and an EHT SST AP (e.g., AP 110) may follow the rules defined in Section 26.8.2 (Individual TWT agreements) of the IEEE specification to exchange frames with the EHT SST non-AP STA during negotiated trigger-enabled TWT SPs with some exceptions. One exception may be that the EHT SST AP may need to ensure that the RUs allocated in DL MU PPDUs and in Trigger frames addressed to the EHT SST non-AP STA are within the subchannel indicated in the Operating Channel Bitmap subfield in the TWT Channel field of the TWT Response, and the EHT SST AP may follow the RU restriction rules defined in Section 27.3.2.8 (RU restrictions for 20-MHz operation) of the IEEE specification in case the EHT SST non-AP STA is a 20-MHz operating STA. Another exception may be that the EHT SST AP may need to ensure that the trigger-enabled TWT SPs do not overlap with TBTTs at which DTIM Beacon frames are sent. A further exception may be that the EHT SST AP may need to ensure that the same subchannel is used for all trigger-enabled TWT SPs that overlap in time.

Under a proposed scheme in accordance with the present disclosure, an EHT SST non-AP STA (e.g., STA 120) may follow the rules defined in Section 26.8.2 (Individual TWT agreements) of the IEEE specification to exchange frames with an EHT SST AP (e.g., AP 110) during trigger-enabled TWT SPs with some exceptions. A first exception may be that the EHT SST non-AP STA may need to be available in the subchannel indicated in the Operating Channel Bitmap subfield in the TWT Channel field of the TWT Response at TWT start times. A second exception may be that the EHT SST non-AP STA may not access the medium in a subchannel using DCF or EDCAF unless the subchannel includes the primary channel. According to the invention, the EHT SST non-AP STA does not respond to Trigger frames addressed to it unless the EHT SST non-AP STA has performed CCA until a frame is detected by which the EHT SST non-AP STA can set its NAV or until a period equal to *NAVSyncDelay* has transpired, whichever is earlier. A fourth exception may be that the EHT SST non-AP STA may update its NAV according to Section 26.2.4 (Updating two NAVs) of the IEEE specification in case the EHT SST non-AP STA receives a PPDU in the subchannel. Under the proposed scheme, an EHT SST non-AP STA in a single-radio non-AP MLD may include a Channel Switch Timing element in Association (or Re-Association) Request frames it transmits to an HE SST AP in an AP MLD to indicate the time required by the EHT SST non-AP STA to switch between different subchannels.

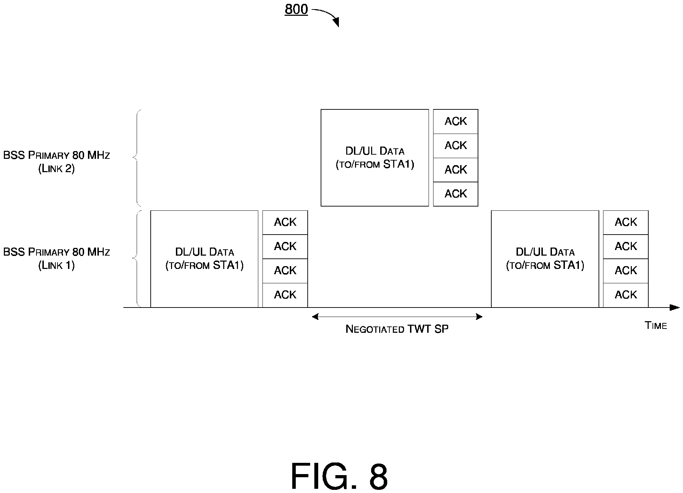

Under a proposed scheme in accordance with the present disclosure with respect to EHT multi-link SST, for an EHT SST AP (e.g., AP 110) in an AP MLD and an EHT SST non-AP STA (e.g., STA 120) in a single-radio non-AP MLD, the positions of a 160-MHz, 80-MHz or 20-MHz frequency segment of the EHT SST non-AP STA in the single-radio non-AP MLD may be switched to respective negotiated positions in another link during a negotiated TWT SP. FIG. 8 illustrates an example scenario 800 of an example implementation of the proposed scheme. Referring to FIG. 8, for a first STA (STA1) as an EHT SST non-AP STA, DL and/or UL data transmission to and/or from STA1, as well as respective acknowledgement (ACK), may be performed in a BSS primary 80-MHz frequency segment on link 1 initially. Then, for a negotiated TWT SP, STA1 may switch its operating segment to a BSS primary 80-MHz frequency segment on link 2 and perform DL and/or UL data transmission (and respective ACK) on link 2 during the negotiated TWT SP. After the negotiated TWT SP, STA1 may switch its operating segment back to the BSS primary 80-MHz frequency segment on link 1 and perform DL and/or UL data transmission (and respective ACK) on link 1.

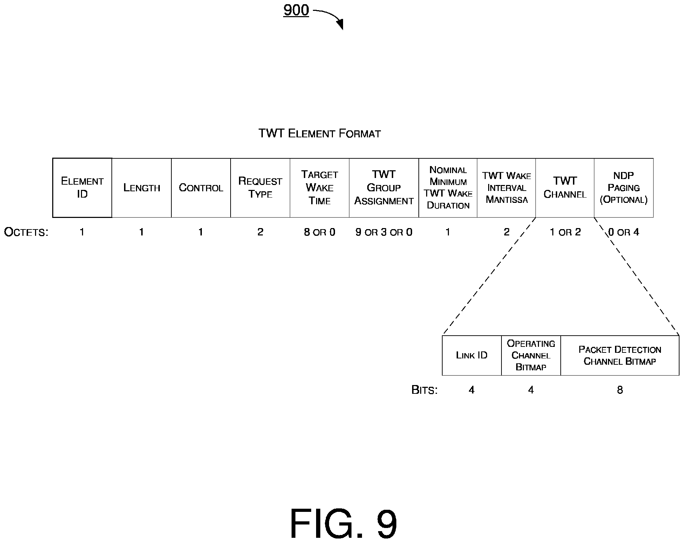

FIG. 9 illustrates an example design 900 of another example TWT element for EHT multi-link SST in accordance with a proposed scheme of the present disclosure. Referring to FIG. 9, under the proposed scheme, a TWT element may include an Element ID field of 1 octet long, a Length field of 1 octet long, a Control field of 1 octet long, a Request Type field of 2 octets long, an optional Target Wake Time field of 8 or 0 octets long, an optional TWT Group Assignment field of 9 or 3 or 0 octets long, a Nominal Minimum TWT Wake Duration field of 1 octet long, a TWT Wake Interval Mantissa field of 2 octets long, a TWT Channel field of 1 or 2 octets long, and an optional NDP Paging field of 0 or 4 octets long. For instance, the TWT Channel field may include a Link ID subfield of 4 bits long, an Operating Channel Bitmap subfield of 4 bits long, and a Packet Detection Channel Bitmap of 8 bits long.

Under a proposed scheme in accordance with the present disclosure with respect to EHT multi-link SST, an EHT SST non-AP STA (e.g., STA 120) in a single-radio non-AP MLD may set up or otherwise establish an EHT multi-link SST operation by negotiating a trigger-enabled TWT as defined in Section 26.8.2 (Individual TWT agreements) of the IEEE specification with some exceptions. A first exception may be that, when the TWT Channel Length subfield is equal to 1, a TWT Response may have a Link ID subfield in the TWT Channel field to indicate the link (identified by the Operating Class and the Channel Number) that the operating bandwidth indicated by the Operating Channel Bitmap subfield in the TWT Channel field is applied during negotiated trigger-enabled TWT SPs. Moreover, a TWT Request may indicate the preferred link through a Link ID subfield in the TWT Channel field. A second exception may be that, when the TWT Channel Length subfield is equal to 1, each bit in the Operating Channel Bitmap subfield in the TWT Channel field may correspond to a respective 80-MHz channel. For instance, a TWT Response may have an Operating Bitmap subfield in the TWT Channel field with up to one bit set to 1 to indicate the 80-MHz frequency segment that would contain the RU allocations addressed to the EHT SST non-AP STA in the single-radio non-AP MLD that is either a 20-MHz operating STA or an 80-MHz operating STA. Moreover, the operating channel of a 20-MHz operating STA may be determined within an 80-MHz frequency segment by the Packet Detection Channel Bitmap subfield. A third exception may be that the TWT Response may have an Operating Channel Bitmap subfield in the TWT Channel field with up to two bits set to 1 to indicate two contiguous or non-contiguous 80-MHz frequency segments containing the RU allocations addressed to the EHT SST non-AP STA in the single-radio non-AP MLD that is an 80+80-MHz operating STA. A fourth exception may be that the TWT Response may have an Operating Channel Bitmap subfield in the TWT Channel field with all bits of up to one of bits B0-B1 and bits B2-B3 set to 1 to indicate whether a primary 160-MHz channel or a secondary 160-MHz channel contains the RU allocations addressed to the EHT SST non-AP STA in the single-radio non-AP MLD that is a 160-MHz operating STA.

Under a proposed scheme in accordance with the present disclosure with respect to EHT multi-link SST, the Packet Detection Channel Bitmap subfield in the TWT Channel field may indicate the position of the packet detection channel of an EHT SST non-AP STA (e.g., STA 120) in a single-radio non-AP MLD during negotiated trigger-enabled TWT SPs. Under the proposed scheme, when the TWT Channel Length subfield is equal to 1, a TWT Response may have the *N^{th}* bit in the Packet Detection Channel Bitmap subfield in the TWT Channel field set to 1. The EHT SST non-AP STA in the single-radio non-AP MLD may perform the packet detection on the *N^{th}* 20-MHz channel in the operating bandwidth indicated by the Operating Channel Bitmap subfield in the TWT Channel field. Additionally, a TWT Request may indicate one or more channels as the preferred packet detection channels. Moreover, the TWT Response may indicate multiple channels as the packet detection channels.

Under a proposed scheme in accordance with the present disclosure with respect to EHT multi-link SST, an EHT SST non-AP STA (e.g., STA 120) in a single-radio non-AP MLD that successfully sets up an EHT multi-link SST operation may follow certain rules. An EHT SST AP (e.g., AP 110) in an AP MLD may follow the rules defined in Section 26.8.2 (Individual TWT agreements) of the IEEE specification to exchange frames with the EHT SST non-AP STA in the single-radio non-AP MLD during negotiated trigger-enabled TWT SPs with some exceptions. One exception may be that the EHT SST AP may need to ensure that the RU allocated in DL MU PPDUs and Trigger frames addressed to the EHT SST non-AP STA are within the subchannel indicated in the Operating Channel Bitmap subfield in the TWT Channel field of the TWT Response and may follow the RU restriction rules defined in Section 27.3.2.8 (RU restrictions for 20-MHz operation) of the IEEE specification in case the EHT SST non-AP STA is a 20-MHz operating STA. Another exception may be that the EHT SST AP may need to ensure that the trigger-enabled TWT SPs do not overlap with Target Beacon Transmission Times (TBTTs) at which DTIM Beacon frames are sent. A further exception may be that the EHT SST AP may need to ensure that the same subchannel is used for all trigger-enabled TWT SPs that overlap in time.

Under a proposed scheme in accordance with the present disclosure with respect to EHT multi-link SST, an EHT SST non-AP STA (e.g., STA 120) in a single-radio non-AP MLD may follow the rules in Section 26.8.2 (Individual TWT agreements) of the IEEE specification to exchange frames with an EHT SST AP (e.g., AP 110) in an AP MLD during trigger-enabled TWT SPs with some exceptions. A first exception may be that the EHT SST non-AP STA may need to be available in the subchannel of the link indicated in the Link ID and the Operating Channel Bitmap subfield in the TWT Channel field of the TWT Response at TWT start times. A second exception may be that the EHT SST non-AP STA may not access the wireless medium in the subchannel using DCF or EDCAF unless the subchannel includes the primary channel. A third exception may be that the EHT SST non-AP STA may not respond to Trigger frames addressed to it unless the EHT SST non-AP STA has performed CCA until a frame is detected by which it can set the NAV thereof or until a period equal to *NAVSyncDelay* has transpired, whichever is earlier. A fourth exception may be that the EHT SST non-AP STA may update its NAV according to Section 26.2.4 (Updating two NAVs) of the IEEE specification in case the EHT SST non-AP STA receives a PPDU in the subchannel.

Under a proposed scheme in accordance with the present disclosure with respect to EHT multi-link SST, an EHT SST non-AP STA (e.g., STA 120) in a single-radio non-AP MLD may include a Channel Switch Timing element in Association (or Re-Association) Request frames it transmits to an HE SST AP (e.g., AP 110) in an AP MLD to indicate the time required by the EHT SST non-AP STA to switch between different subchannels. Alternatively, or additionally, the EHT SST non-AP STA may include a Link Switch Timing element in Association (or Re-Association) Request frames it transmits to the HE SST AP to indicate the time required by the EHT SST non-AP STA to switch between different links.

Under a proposed scheme in accordance with the present disclosure with respect to EHT enhanced multi-link SST operation, in case a STA in a STA MLD receives a multi-user request-to-send (MU-RTS) frame and it can respond with a clear-to-send (CTS) frame as both a virtual carrier sense (CS) (e.g., NAV) and a physical CS are idle, then other STAs in the STA MLD may switch their receive (and transmit) chains to the link on which the STA received the MU-RTS frame. In such cases, the MU-RTS frame may start a frame exchange sequence, and the MU-RTS frame may be transmitted with a single-spatial stream. After responding with the CTS frame, the STA MLD may be able to transmit or receive frames on the link in which the MU-RTS frame was received and may not transmit or receive on the other link(s) until the end of the frame exchange sequence. In case the STA MLD does not respond with the CTS frame, the STA MLD may be in a listening operation on the multiple links. An AP in an AP MLD that sent the MU-RTS frame and received the CTS frame may transmit to the STA in the STA MLD a PPDU up to the total supported receive (Rx) spatial streams (e.g., R1+R2) of the STA MLD until the end of the frame exchange sequence.

Under a proposed scheme in accordance with the present disclosure with respect to EHT enhanced multi-link SST operation, in case a STA in a STA MLD receives a Buffer Status Report Poll (BSRP) Trigger frame from an AP in an AP MLD and it can respond with a TB PPDU containing one or more quality of service (QoS) Null frames containing the buffer status in a QoS Control field or a Buffer Status Report (BSR) Control subfield, then other STAs in the STA MLD may switch their receive (and transmit) chains to the link on which the STA received the BSRP Trigger frame. In such cases, the BSRP Trigger frame may start a frame exchange sequence, and the BSRP Trigger frame may be transmitted with a single-spatial stream. After responding with the TB PPDU, the STA MLD may be able to transmit or receive frames on the link in which the BSRP Trigger frame was received and may not transmit or receive on the other link(s) until the end of the frame exchange sequence. In case the STA MLD does not respond with the TB PPDU, the STA MLD may be in a listening operation on the multiple links. An AP in an AP MLD that sent the BSRP Trigger frame and received the TB PPDU may transmit to the STA in the STA MLD a PPDU up to the total supported Rx spatial streams (e.g., R1+R2) of the STA MLD until the end of the frame exchange sequence.

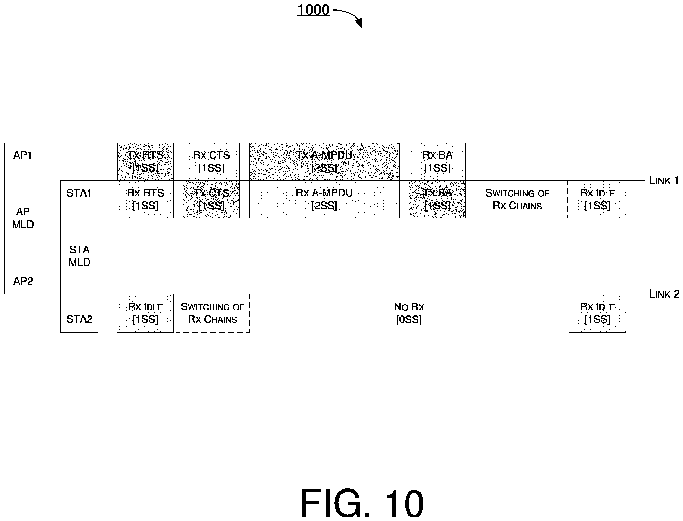

FIG. 10 illustrates an example scenario 1000 of EHT enhanced multi-link SST operation regarding receive chain switching in accordance with a proposed scheme of the present disclosure. In scenario 1000, a first STA (STA1) in a STA MLD may communicate on a first link (link 1) while a second STA (STA2) in the same STA MLD may communicate on a second link (link 2). After STA1 receives a RTS frame addressed to STA1 and when STA1 transmits a CTS frame in response to receiving the RTS frame, STA2 may switch all its receive chains on link 2 to link 1. A first AP (AP1) in an AP MLD may transmit a PPDU up to the total supported Rx spatial streams of the STA MLD instead of the supported Rx spatial streams of each link. As shown in FIG. 10, during a transmission opportunity (TXOP), AP1 may transmit one or more aggregated MAC-level protocol data units (A-MPDUs) on link 1 and STA1 may receive such A-MPDUs on link 1. At the end of the TXOP, STA1 may switch at least one of its receive chains from link 1 to link 2.

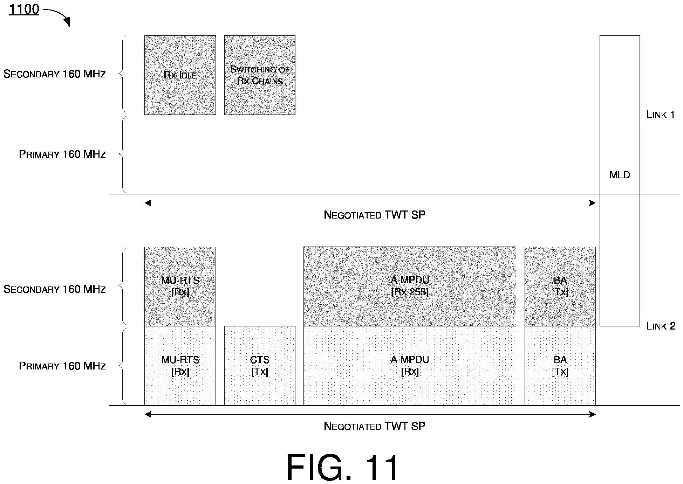

FIG. 11 illustrates an example scenario 1100 of EHT enhanced multi-link SST operation in accordance with a proposed scheme of the present disclosure. When an enhanced multi-link single-radio (EMLSR) MLD has negotiated the TWT SP for each link of the operating links and those TWT SPs are overlapped in time (i.e., the same start time of SPs and the same ending time of the SPs), the TWT scheduling AP MLD shall exchange frames through one SP of the overlapping TWT SP at only one link. In scenario 1100, the AP MLD first obtains the TXOP on the link 2, then the AP MLD only uses the TWT SP on the link 2. The AP MLD does not exchange frames on the link 1 although the TWT SP exist on the link 1. In scenario 1100, after a STA in a STA MLD receives an MU-RTS on a given link, other STAs in the STA MLD may switch their receive chains (and transmit chains) to the same link on which the STA received the MU-RTS. Additionally, in scenario 1100, the APs with which the other STAs are associated may not transmit a PPDU to those corresponding STAs even during a negotiated TWT SP. Referring to FIG. 11, after receiving a respective MU-RTS in each of a primary 160-MHz segment and a secondary 160-MHz segment on link 2 during a negotiated TWT SP, a STA in a STA MLD may respond with a CTS in the primary 160-MHz segment on link 2. Meanwhile, other STA(s) in the STA MLD may switch their receive chains from link 1 to link 2. Then, one or more A-MPDUs may be received by the STA on link 2 in both the primary 160-MHz segment and the secondary 160-MHz segment followed by transmission of a respective block acknowledgement (BA) on link 2 in each of the primary 160-MHz segment and the secondary 160-MHz segment by the STA. Also, as shown in FIG. 11, the AP may not transmit any PPDU on link 1 during the negotiated TWT SP.

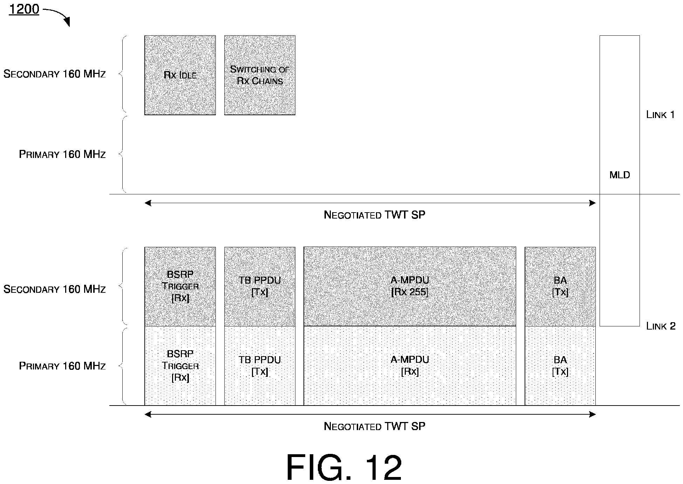

FIG. 12 illustrates an example scenario 1200 of EHT enhanced multi-link SST operation in accordance with a proposed scheme of the present disclosure. When the EMLSR MLD has negotiated the TWT SP for each link of the operating links and those TWT SPs are overlapped in time (i.e., the same start time of SPs and the same ending time of the SPs), the TWT scheduling AP MLD shall exchange frames through one SP of the overlapping TWT SP at only one link. In scenario 1200, the AP MLD first obtains the TXOP on the link 2, then the AP MLD only uses the TWT SP on the link 2. The AP MLD does not exchange frames on the link 1 although the TWT SP exist on the link 1. Referring to FIG. 12, after a STA in a STA MLD receives a BSRP Trigger frame on a given link, other STAs in the STA MLD may switch their receive chains (and transmit chains) to the same link on which the STA received the BSRP Trigger frame. Additionally, the APs with which the other STAs are associated may not transmit a PPDU to those corresponding STAs even during a negotiated TWT SP. Referring to FIG. 12, after receiving a respective BSRP Trigger frame in each of a primary 160-MHz segment and a secondary 160-MHz segment on link 2 during a negotiated TWT SP, a STA in a STA MLD may respond with a respective TB PPDU in each of a primary 160-MHz segment and a secondary 160-MHz segment on link 2. Meanwhile, other STA(s) in the STA MLD may switch their receive chains from link 1 to link 2. Then, one or more A-MPDUs may be received by the STA on link 2 in both the primary 160-MHz segment and the secondary 160-MHz segment followed by transmission of a respective BA on link 2 in each of the primary 160-MHz segment and the secondary 160-MHz segment by the STA. Also, as shown in FIG. 12, the AP may not transmit any PPDU on link 1.

In view of the above, one of ordinary skill in the art would appreciate that an EHT SST operation by a 20-MHz operating STA, an 80-MHz operating STA and a 160-MHz operating STA in an EHT 320-MHz BSS may be supported by implementing one or more of the proposed schemes described herein. For instance, a TWT Request may indicate preferred channel(s) in the Operating Channel Bitmap subfield in the TWT Channel field. Correspondingly, a TWT Response may indicate the switched-to channel(s) of an EHT SST non-AP STA during the negotiated trigger-enabled TWT SP(s).

### Illustrative Implementations

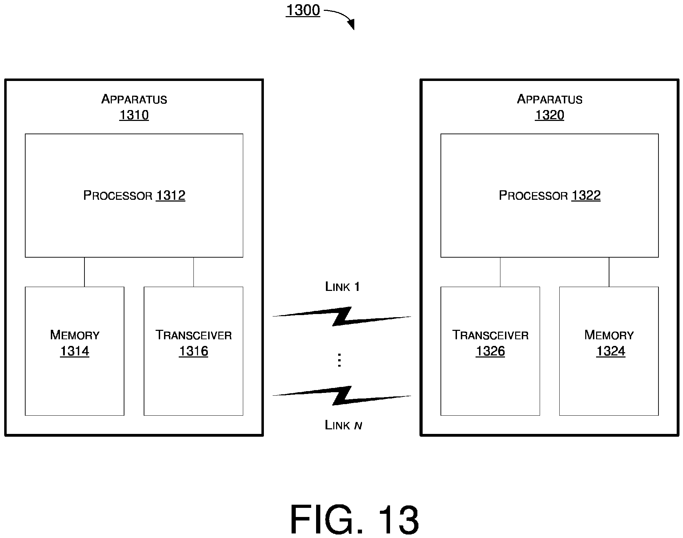

FIG. 13 illustrates an example system 1300 having at least an example apparatus 1310 and an example apparatus 1320 in accordance with an implementation of the present disclosure. Each of apparatus 1310 and apparatus 1320 may perform various functions to implement schemes, techniques, processes and methods described herein pertaining to EHT enhanced SST operation in wireless communications, including the various schemes described above with respect to various proposed designs, concepts, schemes, systems and methods described above as well as processes described below. For instance, apparatus 1310 may be an example implementation of STA 110, and apparatus 1320 may be an example implementation of STA 120.

Each of apparatus 1310 and apparatus 1320 may be a part of an electronic apparatus, which may be a STA or an AP, such as a portable or mobile apparatus, a wearable apparatus, a wireless communication apparatus or a computing apparatus. For instance, each of apparatus 1310 and apparatus 1320 may be implemented in a smartphone, a smart watch, a personal digital assistant, a digital camera, or a computing equipment such as a tablet computer, a laptop computer or a notebook computer. Each of apparatus 1310 and apparatus 1320 may also be a part of a machine type apparatus, which may be an IoT apparatus such as an immobile or a stationary apparatus, a home apparatus, a wire communication apparatus or a computing apparatus. For instance, each of apparatus 1310 and apparatus 1320 may be implemented in a smart thermostat, a smart fridge, a smart door lock, a wireless speaker or a home control center. When implemented in or as a network apparatus, apparatus 1310 and/or apparatus 1320 may be implemented in a network node, such as an AP in a WLAN.

In some implementations, each of apparatus 1310 and apparatus 1320 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the various schemes described above, each of apparatus 1310 and apparatus 1320 may be implemented in or as a STA or an AP. Each of apparatus 1310 and apparatus 1320 may include at least some of those components shown in FIG. 13 such as a processor 1312 and a processor 1322, respectively, for example. Each of apparatus 1310 and apparatus 1320 may further include one or more other components not pertinent to the proposed scheme of the present disclosure (e.g., internal power supply, display device and/or user interface device), and, thus, such component(s) of apparatus 1310 and apparatus 1320 are neither shown in FIG. 13 nor described below in the interest of simplicity and brevity.

In one aspect, each of processor 1312 and processor 1322 may be implemented in the form of one or more single-core processors, one or more multi-core processors, one or more RISC processors or one or more CISC processors. That is, even though a singular term "a processor" is used herein to refer to processor 1312 and processor 1322, each of processor 1312 and processor 1322 may include multiple processors in some implementations and a single processor in other implementations in accordance with the present disclosure. In another aspect, each of processor 1312 and processor 1322 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 1312 and processor 1322 is a special-purpose machine specifically designed, arranged and configured to perform specific tasks including those pertaining to EHT enhanced SST operation in wireless communications in accordance with various implementations of the present disclosure.

In some implementations, apparatus 1310 may also include a transceiver 1316 coupled to processor 1312. Transceiver 1316 may be capable of wirelessly transmitting and receiving data. In some implementations, apparatus 1320 may also include a transceiver 1326 coupled to processor 1322. Transceiver 1326 may include a transceiver capable of wirelessly transmitting and receiving data. Transceiver 1316 of apparatus 1310 and transceiver 1326 of apparatus 1320 may communicate each other over one or more of multiple links link 1 ~ link N, with N > 1, such as a first link and a second link.

In some implementations, apparatus 1310 may further include a memory 1314 coupled to processor 1312 and capable of being accessed by processor 1312 and storing data therein. In some implementations, apparatus 1320 may further include a memory 1324 coupled to processor 1322 and capable of being accessed by processor 1322 and storing data therein. Each of memory 1314 and memory 1324 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 1314 and memory 1324 may include a type of read-only memory (ROM) such as mask ROM, programmable ROM (PROM), erasable programmable ROM (EPROM) and/or electrically erasable programmable ROM (EEPROM). Alternatively, or additionally, each of memory 1314 and memory 1324 may include a type of non-volatile random-access memory (NVRAM) such as flash memory, solid-state memory, ferroelectric RAM (FeRAM), magnetoresistive RAM (MRAM) and/or phase-change memory.

Each of apparatus 1310 and apparatus 1320 may be a communication entity capable of communicating with each other using various proposed schemes in accordance with the present disclosure. For illustrative purposes and without limitation, a description of capabilities of apparatus 1310, as STA 110 which may be a constrained non-AP MLD, and apparatus 1320, as STA 120 which may be a constrained AP MLD, is provided below. It is noteworthy that, although the example implementations described below are provided in the context of WLAN, the same may be implemented in other types of networks.

Under a proposed scheme with respect to EHT enhanced SST operation in wireless communications in accordance with the present disclosure, a non-AP STA of a STA MLD (e.g., STA 110) implemented in processor 1312 of apparatus 1310 may establish, via transceiver 1316, communications between an AP of an AP MLD (e.g., STA 120) and the non-AP STA on one or more links of a plurality of links. Moreover, processor 1312 may perform, via transceiver 1316, an EHT SST operation in a plurality of frequency segments by performing certain operations. For instance, processor 1312 may receive a frame transmitted by the AP on a first link of the plurality of links. Then, processor 1312 may transmit a response to the AP on the first link responsive to receiving the frame from the AP. Alternatively, processor 1312 may perform a listening operation on the plurality of links.

In some implementations, the frame transmitted by the AP may include a MU-RTS frame, and the response transmitted by the non-AP STA may include a CTS frame. In such cases, the MU-RTS frame may start a frame exchange sequence between the AP and the non-AP STA. Moreover, the MU-RTS frame may be transmitted by the AP with a single spatial stream.

In some implementations, responsive to the non-AP STA transmitting the CTS frame to the AP on the first link, processor 1312 may transmit and receive (as the non-AP STA) one or more frames on the first link without transmitting or receiving any frame on other links of the plurality of links until an end of the frame exchange sequence. Additionally, processor 1312 may switch (as the non-AP STA) at least one receive chain from the first link to a second link of the plurality of links at an end of a TXOP.

In some implementations, responsive to the non-AP STA transmitting the CTS frame to the AP on the first link, processor 1322 may transmit (as the AP) to the non-AP STA a PPDU up to a total supported receive spatial streams of the STA MLD until an end of the frame exchange sequence.

In some implementations, the frame transmitted by the AP may include a BSRP Trigger frame, and the response transmitted by the non-AP STA may include a TB PPDU. In such cases, the BSRP Trigger frame may start a frame exchange sequence between the AP and the non-AP STA. Moreover, the BSRP Trigger frame may be transmitted by the AP with a single spatial stream.

In some implementations, responsive to the non-AP STA transmitting the TB PPDU to the AP on the first link, processor 1312 may transmit and receive (as the non-AP STA) one or more frames on the first link without transmitting or receiving any frame on other links of the plurality of links until an end of the frame exchange sequence. Additionally, processor 1312 may switch (as the non-AP STA) at least one receive chain from the first link to a second link of the plurality of links at an end of a TXOP.

In some implementations, responsive to the non-AP STA transmitting the TB PPDU to the AP on the first link, processor 1322 may transmit (as the AP) to the non-AP STA a PPDU up to a total supported receive spatial streams of the STA MLD until an end of the frame exchange sequence.

### Illustrative Processes

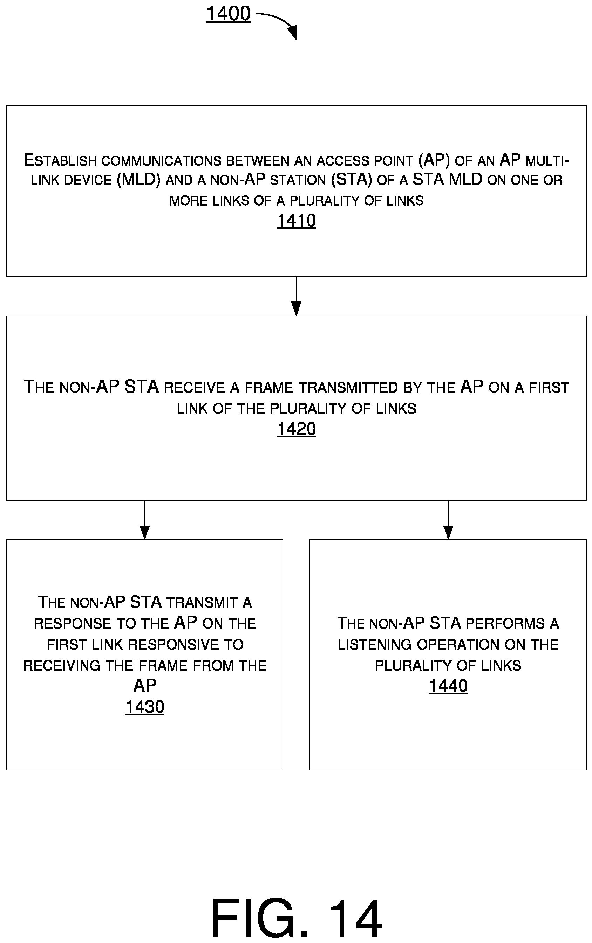

FIG. 14 illustrates an example process 1400 in accordance with an implementation of the present disclosure. Process 1400 may represent an aspect of implementing various proposed designs, concepts, schemes, systems and methods described above. More specifically, process 1400 may represent an aspect of the proposed concepts and schemes pertaining to EHT enhanced SST operation in wireless communications in accordance with the present disclosure. Process 1400 includes operations, actions, or functions as illustrated by blocks 1410, 1420, 1430 and 1440. Although illustrated as discrete blocks various blocks of process 1400 may be divided into additional blocks, combined into fewer blocks, or eliminated, depending on the desired implementation. Moreover, the blocks/sub-blocks of process 1400 may be executed in the order shown in FIG. 14 or, alternatively in a different order. Furthermore, one or more of the blocks/sub-blocks of process 1400 may be executed repeatedly or iteratively. Process 1400 may be implemented by or in apparatus 1310 and apparatus 1320 as well as any variations thereof. Solely for illustrative purposes and without limiting the scope, process 1400 is described below in the context of apparatus 1310 as STA 110 (e.g., a STA or AP) and apparatus 1320 as STA 120 (e.g., a peer STA or AP) of a wireless network such as a WLAN in accordance with one or more of IEEE 802.11 standards. Process 1400 may begin at block 1410.

At 1410, process 1400 involves processor 1312 of apparatus 1310 establishing, via transceiver 1316, communications between an AP of an AP MLD (e.g., STA 120) and a non-AP STA of a STA MLD (e.g., STA 110) on one or more links of a plurality of links. Process 1400 proceeds from 1410 to 1420.

At 1420, process 1400 involves processor 1312 receiving a frame transmitted by the AP on a first link of the plurality of links. Process 1400 proceeds from 1420 to either 1430 or 1440.

At 1430, process 1400 involves processor 1312 transmitting a response to the AP on the first link responsive to receiving the frame from the AP, when both a virtual carrier sense and a physical carrier sense are idle.

At 1440, process 1400 involves processor 1312 performing a listening operation on the plurality of links.

In some implementations, the frame transmitted by the AP may include a MU-RTS frame, and the response transmitted by the non-AP STA may include a CTS frame. In such cases, the MU-RTS frame may start a frame exchange sequence between the AP and the non-AP STA. Moreover, the MU-RTS frame may be transmitted by the AP with a single spatial stream.

In some implementations, responsive to the non-AP STA transmitting the CTS frame to the AP on the first link, process 1400 may involve processor 1312 transmitting and receiving (as the non-AP STA) one or more frames on the first link without transmitting or receiving any frame on other links of the plurality of links until an end of the frame exchange sequence. Additionally, process 1400 may involve processor 1312 switching (as the non-AP STA) at least one receive chain from the first link to a second link of the plurality of links at an end of a TXOP.

In some implementations, responsive to the non-AP STA transmitting the CTS frame to the AP on the first link, process 1400 may involve processor 1322 transmitting (as the AP) to the non-AP STA a PPDU up to a total supported receive spatial streams of the STA MLD until an end of the frame exchange sequence.

In some implementations, the frame transmitted by the AP may include a BSRP Trigger frame, and the response transmitted by the non-AP STA may include a TB PPDU. In such cases, the BSRP Trigger frame may start a frame exchange sequence between the AP and the non-AP STA. Moreover, the BSRP Trigger frame may be transmitted by the AP with a single spatial stream.

In some implementations, responsive to the non-AP STA transmitting the TB PPDU to the AP on the first link, process 1400 may involve processor 1312 transmitting and receiving (as the non-AP STA) one or more frames on the first link without transmitting or receiving any frame on other links of the plurality of links until an end of the frame exchange sequence. Additionally, process 1400 may involve processor 1312 switching (as the non-AP STA) at least one receive chain from the first link to a second link of the plurality of links at an end of a TXOP.

In some implementations, responsive to the non-AP STA transmitting the TB PPDU to the AP on the first link, process 1400 may involve processor 1322 transmitting (as the AP) to the non-AP STA a PPDU up to a total supported receive spatial streams of the STA MLD until an end of the frame exchange sequence.

### Additional Notes

The herein-described subject matter sometimes illustrates different components contained within, or connected with, different other components. It is to be understood that such depicted architectures are merely examples, and that in fact many other architectures can be implemented which achieve the same functionality. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration. Accordingly, the various implementations disclosed herein are not intended to be limiting, with the true scope being indicated by the following claims.

## Claims

1. A method, comprising:
establishing communications between an access point, in the following also referred to as AP, of an AP multi-link device, in the following also referred to as MLD, and a non-AP station, in the following also referred to as STA, of a STA MLD on one or more links of a plurality of links (1410); and
the non-AP STA receiving a frame transmitted by the AP on a first link of the plurality of links (1420);
**characterized in that**:
the non-AP STA transmitting a response to the AP on the first link responsive to receiving the frame from the AP when both a virtual carrier sense and a physical carrier sense are idle (1430); and
the non-AP STA performing a listening operation on the plurality of links otherwise (1440).

2. The method of Claim 1, wherein the frame transmitted by the AP comprises a multi-user request-to-send, in the following also referred to as MU-RTS, frame, and wherein the response transmitted by the non-AP STA comprises a clear-to-send, in the following also referred to as CTS, frame.

3. The method of Claim 2, wherein the MU-RTS frame starts a frame exchange sequence between the AP and the non-AP STA, and wherein the MU-RTS frame is transmitted with a single spatial stream.

4. The method of Claim 2 or 3, further comprising:
responsive to the non-AP STA transmitting the CTS frame to the AP on the first link, the non-AP STA transmitting and receiving one or more frames on the first link without transmitting or receiving any frame on other links of the plurality of links until an end of the frame exchange sequence.

5. The method of Claim 4, further comprising:
the non-AP STA switching at least one receive chain from the first link to a second link of the plurality of links at an end of a transmission opportunity, in the following also referred to as TXOP.

6. The method of any one of Claims 2 to 5, further comprising:
responsive to the non-AP STA transmitting the CTS frame to the AP on the first link, the AP transmitting to the non-AP STA a Physical Layer Convergence Protocol, in the following also referred to as PLCP, Protocol Data Unit, in the following also referred to as PPDU, up to a total supported receive spatial streams of the STA MLD until an end of the frame exchange sequence.

7. The method of any one of Claims 1 to 6, wherein the frame transmitted by the AP comprises a Buffer Status Report Poll, in the following also referred to as BSRP, Trigger frame, and wherein the response transmitted by the non-AP STA comprises a trigger-based, in the following also referred to as TB, PLCP PPDU.

8. The method of Claim 7, wherein the BSRP Trigger frame starts a frame exchange sequence between the AP and the non-AP STA, and wherein the BSRP Trigger frame is transmitted with a single spatial stream.

9. The method of Claim 7 or 8, further comprising:
responsive to the non-AP STA transmitting the TB PPDU to the AP on the first link, the non-AP STA transmitting and receiving one or more frames on the first link without transmitting or receiving any frame on other links of the plurality of links until an end of the frame exchange sequence.

10. The method of Claim 9, further comprising:
the non-AP STA switching at least one receive chain from the first link to a second link of the plurality of links at an end of a TXOP.

11. The method of any one of Claims 7 to 10, further comprising:
responsive to the non-AP STA transmitting the TB PPDU to the AP on the first link, the AP transmitting to the non-AP STA a PPDU up to a total supported receive spatial streams of the STA MLD until an end of the frame exchange sequence.

12. An apparatus (1310; 1320) implementable in a station, in the following also referred to as STA, multi-link device, in the following also referred to as MLD, comprising:
a transceiver (1316; 1326) configured to communicate wirelessly; and
a processor (1312; 1322) coupled to the transceiver (1316; 1326) and configured to perform operations comprising the method steps as defined in any one of the preceding claims.

## Patentansprüche

1. Verfahren, umfassend:
Herstellen von Kommunikationen zwischen einem Zugangspunkt, im Folgenden auch als AP bezeichnet, einer AP-Mehrfachverbindungsvorrichtung, im Folgenden auch als MLD bezeichnet, und einer Nicht-AP-Station, im Folgenden auch als STA bezeichnet, einer STA-MLD auf einer oder mehreren Verbindungen einer Vielzahl von Verbindungen (1410); und
wobei die Nicht-AP-STA einen Rahmen empfängt, der durch den AP auf einer ersten Verbindung der Vielzahl von Verbindungen (1420) übertragen wird;
**dadurch gekennzeichnet, dass**:
die Nicht-AP-STA eine Antwort an den AP auf der ersten Verbindung als Reaktion auf das Empfangen des Rahmens von dem AP überträgt, wenn sowohl eine virtuelle Trägerabtastung als auch eine physikalische Trägerabtastung im Leerlauf sind (1430); und
die Nicht-AP-STA andernfalls einen Hörvorgang auf der Vielzahl von Verbindungen durchführt (1440).

2. Verfahren nach Anspruch 1, wobei der Rahmen, der durch den AP übertragen wird, einen Mehrbenutzer-Anforderung-zum-Senden, im Folgenden auch als MU-RTS bezeichnet, -Rahmen umfasst, und wobei die Antwort, die durch die Nicht-AP-STA übertragen wird, einen Freigabe-zum-Senden, im Folgenden auch als CTS bezeichnet, - Rahmen umfasst.

3. Verfahren nach Anspruch 2, wobei der MU-RTS-Rahmen eine Rahmenaustauschsequenz zwischen dem AP und der Nicht-AP-STA startet, und wobei der MU-RTS-Rahmen über einen einzelnen räumlichen Strom übertragen wird.

4. Verfahren nach Anspruch 2 oder 3, ferner umfassend:
als Reaktion darauf, dass die Nicht-AP-STA den CTS-Rahmen an den AP auf der ersten Verbindung überträgt, überträgt und empfängt die Nicht-AP-STA einen oder mehrere Rahmen auf der ersten Verbindung, ohne bis zu einem Ende der Rahmenaustauschsequenz irgendeinen Rahmen auf anderen Verbindungen der Vielzahl von Verbindungen zu übertragen oder zu empfangen.

5. Verfahren nach Anspruch 4, ferner umfassend:
die Nicht-AP-STA schaltet mindestens eine Empfangskette von der ersten Verbindung zu einer zweiten Verbindung der Vielzahl von Verbindungen an einem Ende einer Übertragungsgelegenheit, im Folgenden auch als TXOP bezeichnet.

6. Verfahren nach einem der Ansprüche 2 bis 5, ferner umfassend:
als Reaktion darauf, dass die Nicht-AP-STA den CTS-Rahmen an den AP auf der ersten Verbindung überträgt, überträgt der AP an die Nicht-AP-STA eine Physical Layer Convergence Protocol, im Folgenden auch als PLCP bezeichnet, Protokolldateneinheit, im Folgenden auch als PPDU bezeichnet, bis zu einem insgesamt unterstützten räumlichen Empfangsstrom der STA-MLD bis zu einem Ende der Rahmenaustauschsequenz.

7. Verfahren nach einem der Ansprüche 1 bis 6, wobei der Rahmen, der durch den AP übertragen wird, einen Pufferstatusbericht-Poll, im Folgenden auch als BSRP bezeichnet, -Trigger-Rahmen umfasst, und wobei die Antwort, die durch die Nicht-AP-STA übertragen wird, eine Trigger-basierte, im Folgenden auch als TB bezeichnet, PLCP-PPDU umfasst.

8. Verfahren nach Anspruch 7, wobei der BSRP-Trigger-Rahmen eine Rahmenaustauschsequenz zwischen dem AP und der Nicht-AP-STA startet, und wobei der BSRP-Trigger-Rahmen über einen einzelnen räumlichen Strom übertragen wird.

9. Verfahren nach Anspruch 7 oder 8, ferner umfassend:
als Reaktion darauf, dass die Nicht-AP-STA die TB-PPDU an den AP auf der ersten Verbindung überträgt, überträgt und empfängt die Nicht-AP-STA einen oder mehrere Rahmen auf der ersten Verbindung, ohne bis zu einem Ende der Rahmenaustauschsequenz irgendeinen Rahmen auf anderen Verbindungen der Vielzahl von Verbindungen zu übertragen oder zu empfangen.

10. Verfahren nach Anspruch 9, ferner umfassend:
die Nicht-AP-STA schaltet mindestens eine Empfangskette von der ersten Verbindung zu einer zweiten Verbindung der Vielzahl von Verbindungen an einem Ende einer TXOP.

11. Verfahren nach einem der Ansprüche 7 bis 10, ferner umfassend:
als Reaktion darauf, dass die Nicht-AP-STA die TB-PPDU an den AP auf der ersten Verbindung überträgt, überträgt der AP an die Nicht-AP-STA eine PPDU bis zu einem insgesamt unterstützten räumlichen Empfangsstrom der STA-MLD bis zu einem Ende der Rahmenaustauschsequenz.

12. Vorrichtung (1310; 1320), die in einer Station, im Folgenden auch als STA bezeichnet, einer Mehrfachverbindungsvorrichtung, im Folgenden auch als MLD bezeichnet, implementierbar ist, umfassend:
einen Transceiver (1316; 1326), der konfiguriert ist, drahtlos zu kommunizieren; und
einen Prozessor (1312; 1322), der mit dem Transceiver (1316; 1326) gekoppelt ist und konfiguriert ist, Vorgänge durchzuführen, die die Verfahrensschritte nach einem der vorhergehenden Ansprüche umfassen.

## Revendications

1. Procédé, comprenant :
l'établissement de communications entre un point d'accès, ci-après également appelé AP, d'un dispositif à liaisons multiples AP, ci-après également appelé MLD, et une station non-AP, ci-après également appelée STA, d'un STA MLD sur une ou plusieurs liaisons d'une pluralité de liaisons (1410) ; et
la réception par la STA non-AP d'une trame transmise par l'AP sur une première liaison de la pluralité de liaisons (1420) ;
**caractérisé en ce que** :
la STA non-AP transmet une réponse à l'AP sur la première liaison en réponse à la réception de la trame en provenance de l'AP lorsqu'à la fois une détection de porteuse virtuelle et une détection de porteuse physique sont inactives (1430) ; et
autrement, la STA non-AP effectue une opération d'écoute sur la pluralité de liaisons (1440).

2. Procédé selon la revendication 1, dans lequel la trame transmise par l'AP comprend une trame de demande d'envoi multi-utilisateur, ci-après également appelée MU-RTS, et dans lequel la réponse transmise par la STA non-AP comprend une trame prêt à émettre, ci-après également appelée CTS.

3. Procédé selon la revendication 2, dans lequel la trame MU-RTS démarre une séquence d'échange de trame entre l'AP et la STA non-AP, et dans lequel la trame MU-RTS est transmise avec un seul flux spatial.

4. Procédé selon la revendication 2 ou 3, comprenant en outre :
en réponse à la STA non-AP transmettant la trame CTS à l'AP sur la première liaison, la STA non-AP transmettant et recevant une ou plusieurs trames sur la première liaison sans transmettre ou recevoir aucune trame sur d'autres liaisons de la pluralité de liaisons jusqu'à une fin de la séquence d'échange de trame.

5. Procédé selon la revendication 4, comprenant en outre :
la STA non-AP commutant au moins une chaîne de réception de la première liaison à une seconde liaison de la pluralité de liaisons à une fin d'une opportunité de transmission, ci-après également appelée TXOP.

6. Procédé selon l'une quelconque des revendications 2 à 5, comprenant en outre :
en réponse à la STA non-AP transmettant la trame CTS à l'AP sur la première liaison, l'AP transmettant à la STA non-AP une unité de données de protocole, ci-après également appelée PPDU, de protocole de convergence de couche physique, ci-après également appelé PLCP, jusqu'à un total de flux spatiaux de réception pris en charge du STA MLD jusqu'à une fin de la séquence d'échange de trame.

7. Procédé selon l'une quelconque des revendications 1 à 6, dans lequel la trame transmise par l'AP comprend une trame de déclenchement de sondage de rapport d'état de mémoire tampon, ci-après également appelée BSRP, et dans lequel la réponse transmise par la STA non-AP comprend une PPDU de PLCP basée sur un déclencheur, ci-après également appelée TB.

8. Procédé selon la revendication 7, dans lequel la trame de déclenchement BSRP démarre une séquence d'échange de trame entre l'AP et la STA non-AP, et dans lequel la trame de déclenchement BSRP est transmise avec un seul flux spatial.

9. Procédé selon la revendication 7 ou 8, comprenant en outre :
en réponse à la STA non-AP transmettant la PPDU TB à l'AP sur la première liaison, la STA non-AP transmettant et recevant une ou plusieurs trames sur la première liaison sans transmettre ou recevoir aucune trame sur d'autres liaisons de la pluralité de liaisons jusqu'à une fin de la séquence d'échange de trame.

10. Procédé selon la revendication 9, comprenant en outre :
la STA non-AP commutant au moins une chaîne de réception de la première liaison à une seconde liaison de la pluralité de liaisons à une fin d'une TXOP.

11. Procédé selon l'une quelconque des revendications 7 à 10, comprenant en outre :
en réponse à la STA non-AP transmettant la PPDU TB à l'AP sur la première liaison, l'AP transmettant à la STA non-AP une PPDU jusqu'à un total de flux spatiaux de réception pris en charge du STA MLD jusqu'à une fin de la séquence d'échange de trame.

12. Appareil (1310 ; 1320) pouvant être mis en oeuvre dans un dispositif à liaisons multiples, ci-après également appelé MLD, de station, ci-après également appelée STA, comprenant :
un émetteur-récepteur (1316 ; 1326) configuré pour communiquer sans fil ; et
un processeur (1312 ; 1322) couplé à l'émetteur-récepteur (1316 ; 1326) et configuré pour effectuer des opérations comprenant les étapes de procédé telles que définies dans l'une quelconque des revendications précédentes.
